# EUROPEAN PATENT SPECIFICATION

(11) **EP 0 820 475 B1**
(45) Date of publication and mention of the grant of the patent: **01.09.1999**
(21) Application number: 96910041.1
(22) Date of filing: 10.04.1996
(51) Int. Cl.: C08F 4/02, C08F 4/76

(54) **METHOD OF PREPARING CATALYST COMPONENTS**
VERFAHREN ZUR HERSTELLUNG VON KATALYSATORINHALTSTOFFEN
PROCEDE DE PREPARATION DE CONSTITUANTS CATALYTIQUES

(30) Priority: 12.04.1995 FI 951780
(43) Date of publication of application: 28.01.1998
(73) Proprietor: BOREALIS A/S, 2800 Lyngby (DK)
(72) Inventor: KNUUTTILA, Hilkka, FIN-06400 Porvoo (FI); HOKKANEN, Harri, FIN-00170 Helsinki (FI); SALO, Eija, FIN-06100 Porvoo (FI)
(74) Representative: Miettinen, Teuvo Seppo Aukusti
(86) International application number: FI9600190
(87) International publication number: WO9632423

(56) References cited:
- EP-A- 0 206 794
- WO-A-95/12622
- WO-A-95/15216

## Description

The invention relates to a method for preparing catalyst components. Particularly the invention relates to a method for making catalysts comprising metallocenes of transition metals.

Recent developments in the field of olefin polymerization catalysts include metallocene catalysts, which comprise metallocene compounds of transition metals together with alumoxane compounds. These catalysts have been suggested to be used as a homogenous system or deposited onto carrier, for example inorganic oxide carriers. Thus these catalysts typically comprise as a procatalyst component a metallocene compound, for example bis(cyclopentadienyl)titanium dialkyl or bis(cyclopentadienyl)zirconium alkonyl or chlorides thereof, and an activator component, which typically is alumoxane or an ionic activator.

One known problem related to the use of metallocene catalysts is the poor morphology of the resulting polymer particles, which can be seen as a low bulk density and as inhomogenous polymer. Because of the so-called replication phenomena the forming polymer particles assume similar morphology as the catalyst particles used to polymerize monomers, the problems related to poor morphology of polymer can be decreased by improving the morphology of the catalysts used for polymerization.

Supported metallocene catalysts are typically prepared by impregnating methylalumoxane and metallocene compound onto a support or carrier material. Such methods are usually slurry or solution methods, in which the first step is the formation of a solution of the metallocene compound and alumoxane. This solution is added into a porous carrier material, after which the solvent is removed by evaporation. Most often the solvent is used in rather big amounts, even so that the carrier material is added to a solution of metallocene and alumoxane compounds. This kind of method necessitates an efficient evaporating, in which the components rather tend to deposit on the surface of the carrier than to impregnate evenly into the pores of the carrier material. Thus the method leads normally to catalysts having a bad morphology, uneven metallocene distribution on the carrier and thus to a bad quality of polymer particles and to a unnecessarily low catalyst activity.

The use of high amounts of solvents in the preparation of the catalysts is as such a disadvantage. It is also known methods, in which the amount of the solvent used is limited. Thus for example in WO94/21691 there is disclosed a method, in which the support comprises porous silica, which is contacted with a volume of a mixture comprising a metallocene and an alumoxane, wherein the volume of the mixture is no greater than the total pore volume of the silica. After evaporation of the solvent an active catalyst is achieved, which results in lower fouling of the reactor and improved polymer morphology in the polymerization of alphaolefins.

All methods based on the impregnation of metallocene/alumoxane solutions onto carriers have certain disadvantages. After the evaporation of the solvent the catalysts are in active form and therefore they are very sensitive for poisoning. During a prolonged storage this can lead to a deactivation of the catalyst. This problem can be avoided by preparing the catalysts just before using it. However the catalyst preparation itself requires a considerable amount of time involving one or more solvent evaporation steps and so on. Most often the site of the catalyst preparation and the site of polymerization are very far from each other and the transport of the catalyst takes time.

Another disadvantage in the known metallocene catalyst preparation methods is that the solubility of most metallocenes is very poor even to aromatic solvents. A further disadvantage in the known methods, in which solutions of metallocene compounds and alumoxane compounds are used is that the stability of these complex solutions is very poor. Thus there is a need for improved methods for making metallocene catalysts without disadvantages described above.

The present invention relates to a method for preparing metallocene catalysts for olefin polymerization while avoiding the disadvantages described above. Thus one object of the invention is a method for making metallocene catalyst components, where the disadvantages related to catalyst poisoning, poor solubility of metallocenes and poor stability of metallocene/alumoxane complexs can be avoided. A further object of the invention is a method, in which metallocenes having good morphology and hence a good morphology of the polymer is achieved. Thereby polymers having a very small amount of fines can be produced.

According to the invention it has been surprisingly found that it is possible to add metallocenes onto catalyst carriers without any solvents in a temperature which is, however, below the boiling point of the metallocene compound. Thus the elimination of this step characteristic to all methods in prior art makes possible to avoid the disadvantages of the known methods and to achieve the goals of the invention.

Thus one embodiment of the invention relates to a method for preparing catalyst components for ethylene homo or copolymerization, which catalyst component comprises at least one metallocene compound on porous inorganic carrier or support material. The catalyst component is characterized mainly in what is stated in the characterizing clause of Claim 1.

By mixing the carrier material with said metallocene in the absence of any solvents a so-called "dry mixing method" having several advantages is achieved. The poor solubility of the most metallone compounds into typical solvents and the extra step of removing these solvents are no more a problem. The catalyst according to the method has good morphology properties and no tendency towards fouling in the polymerization. The polymers produced by using the catalysts of the invention have good morphology propertis, narrow molecular weight distribution and composition distribution.

The essential feature of the invention is that the metallocene compound is mixed with the carrier particles in dry state. This means that no solvents are used. The metallocene is physically mixed with the carrier material at an elevated temperature for a sufficient time to achieve an even distribution of the metallocene onto carrier particles. The mixing is carried out in the temperature which is at least 50 °C but below the vapourization temperature of the metallocene compound is reaction conditions.

Different metallocene compounds have different melting and boiling points and therefore a different mixing temperatures for each metalloce compound can be used. The upper limit for the highest temperature applicable is the temperature where the metallocene compound vapourizes. Therefore it is possible to use temperatures, in which the metallocene compound is flowing or even melted. However in some cases the temperature can be below the melting point of the metallocene compound. The reasons why in such temperatures an even distribution of the metallocene compound can be achieved, is not exactly konown, but it is possible that the contact of carrier particles with the metallocene compound at an elevated temperature increases the mobility of the metallocene compound in sufficient degree to achieve an even distribution of the metallocene.

The mixing time for the contact of the metallocene and the carrier material can be selected within broad range. A sufficient mixing time can be found for example by experimental way, but in practise the mixing time can be from one minute to several hours. Too long mixing times can be detrimental for the catalyst activity and the stability. Therefore preferable mixing time normally is between 5 minutes to 3 hours.

It is preferable that the carrier material and the metallocene compound are first pre-mixed by stirring them at room temperature or at rather low temperatures for a period of time which allows the formation of a homogenous physical mixture of the metallocene compound with the carrier material, for example from 10 minutes to 1.5 hours. Thereafter the temperature is raised to at least 100°C and the stirring is continued at this temperature for a period of time which can be for example from 30 minutes to 1.5 hours.

As metallocene compounds it is possible to use any kind and type of metallocene. Thus suitable metallocene compounds are those which have a formula (Cp)ₘRₙMR'ₒXₚ, where Cp is an unsubstituted or substituted and/or fused homo or heterocyclopentadienyl, R is a group having 1-4 atoms and bridging two Cp rings, M is a transition metal of group 4A, 5A or 6A (Hubbard), R' is C₁-C₂ hydrocarbyl or hydrocarboxy group and X is a halogen atom, wherein m is 1-3, n is 0 or 1, p is 0-3 and sum n+o+p corresponds the oxidation state of the transition metal M. The transition metal M is preferably zirconium or hafnium, most preferably zirconium. Examples from suitable metalloce compoiunds are, among others), bis(cyclopentadienyl)zirconium dichloride and bis(indenyl)zirconiumdichloride.

The catalyst prepared as above is ready for polymerization without further treatments and washing. Thus the method according to the invention gives great economical advantages over the the prior art technique.

The polymerization activity of the catalyst component described above can be increased by known activator compounds, such as alumoxane compounds. One method is to add the alumoxane to the metallocene containing catalyst compound. In that case the alumoxane compound is preferably added by impregnation method, in which a solution of alumoxane compound is impregnated into the catalyst component. The amount of such solution is preferably not greater than the total free pore volume of the catalyst compound already containing the metallocene compound. After impregnation the solvent can be removed for example by evaporation. Another method for applying activator compounds is to add it straight into the polymerization reactor along with the metallocene containing catalyst component.

Suitable activators are for example alumoxane compounds having a formula R-(Al(R)-O)ₙ-AlR2 or (-Al(R)-O-)ₘ, where n is 1-40, m is 3-40 and R is a C₁-C₈ alkyl group. Preferably R is a methyl group.

Alumoxane compounds can be prepared by reacting aluminum trialkyl with water or with hydrated inorganic salts, such as CuSO₄.5H₂O or Al₂(SO₄)₃.5H₂O. The reaction product is generally a mixture of linear and cyclic compounds. A preferable alumoxane is methylalumoxane (MAO).

According to a more preferred embodiment of the invention the activator compounds are added to carrier material before adding of the metallocene compound. Thus according to the invention it is achieved a method for preparing a catalyst component for homo or copolymerization of olefins, said catalyst component comprising alumoxane compounds and metallocene compounds on porous inorganic carrier, the method comprising the following steps:
i) said carrier is first impregnated with an alumoxane compound having a formula R-(Al(R)-O)ₙ-AlR2 or (-Al(R)-O-)ₘ, where n is 1-40, m is 3-40 and R is a C₁-C₈ alkyl group, in order to achieve a first reaction product,
ii) said first reaction product is mixed in the absence of solvents with a metallocene compound having a formula (Cp)ₘRₙMR'ₒXₚ, where Cp is an unsubstituted or substituted and/or fused homo or heterocyclopentadienyl, R is a group having 1-4 atoms and bridging two Cp rings, M is a transition metal of group 4A, 5A or 6A (Hubbard), R' is C₁-C₂ hydrocarbyl or hydrocarboxy group and X is a halogen atom, wherein m is 1-3, n is 0 or 1, p is 0-3 and sum n+o+p corresponds the oxidation state of the transition metal M, and
iii) mixing the product obtained in step (ii) for a sufficient time to obtain said catalyst component having said metallocene evenly distributed onto carrier particles.

The first step of the method above can be carried out for example by making a solution of the alumoxane compound in a suitable solvent and by impregnating the carrier material with solution. The solvent can then be removed for example by evaporation or washing. A more preferable method is to mix the carrier material with such amount of the alumoxane solution, which does not exceed the total pore volume of the carrier material used. In that case there is no need to remove excess amounts of alumoxane compound from the carrier and also the amount of the solvent to be evaporated is smaller. Thus the carrier material treated with alumoxane compounds is a stabile component, which can be stored for prolonged times without instability problems, because the metallocene compound is not present. Further it is now possible use carrier materials pre-activated with alumoxane and manufactured elsewhere. The metallocene containing catalyst can then be prepared at the polymerization plant just before need with simple and low-cost equipment, because no evaporation or washing steps are not necessary. Also the problems related to poor stability of metallocene/MAO complex solutions in those methods where metallocene and the activator (MAO) are added at the same time as a complex solution, are also avoided according to the invention.

The solvent used in the addition of the alumoxane compound can be any solvent, which dissolve the alumoxane compound used. Typical solvents include various hydrocarbons such as linear and cyclic alkanes and aromatics, e.g. toluene.

The amount of the alumoxane compound is selected preferably so that the ratio of aluminum to the transition metal is from 25 to 10000, preferably from 50 to 500. The amount of the transition metal in the final catalyst can be between 0,001 and 10 weight percent (on an elemental basis) and the amount of aluminum (on an elemental basis) can be from 1 to 40 weight percent.

The support or carrier material used in the method according to the invention may be any porous inorganic, substantially inert support, such as an inorganic oxide or salt. In practise the support used is preferably a fine-grained inorganic oxide such as an inorganic oxide of an element of Group 2(A), 3(B) or 4 of the Periodic Table (Hubbard), most preferably silica, alumina or a mixture or derivative of these. Other inorganic oxides which can be used either alone or together with silica, alumina or silica-alumina, are magnesium oxide, titanium dioxide, zirconium oxide, aluminum phosphate etc.

The support used in the method is preferably dry. In general, metal oxide supports also contain surface hydroxyl groups which may react with metallocene or alumoxane. Therefore the support can be dehydrated or dehydroxylated before use. Such treatment may be either a thermal treatment or a reaction between the surface hydroxyl groups of the support and a reagent contacted with it.

Preferable support materials to be used according to the invention are porous silica or alumina carriers. The pore volume is not critical and can be varied within rather wide limits, but normally in commercial support materials the pore volume is preferably approx. 0,9 - 3.5 ml/g.

The catalyst prepared according to the invention can be applied to the polymerization or homopolymerization of olefins, especially ethylene and propylene. Comonomers, such as C₂-C₂₀ olefins, dienes or cyclic olefins or the like can also be used in the polymerization.

The polymerization can be carried out by any polymerization method. Typical methods are slurry polymerization or gas phase polymerization.

In the following the invention is further illustrated by examples.

### Support preparation

### Example 1

30 g of silica (Davison 955) was dehydrated at 600 °C for 4 hours in nitrogen flow. Then 37.8 ml of 30 percent by weight of methylalumoxane (MAO) in toluene was added to 10.2 ml of toluene. This solution was impregnated onto silica so that only the silica pores were filled with the solution by adding the MAO solution to silica and by mixing for one hour at room temperature. After mixing toluene was evaporated away and the support material containing MAO was obtained as a free flowing powder.

### Catalyst preparation

### Example 2

8.1 g of the support material prepared in Example 1 was placed in a glass reactor equipped with a stirrer and inert gas system. 91 mg of bis(n-butyl-cyclopentadienyl)zirconium dichloride was weighed and added to the support material and the mixture was stirred as dry powder for one hour. Then the temperature of the reactor was increased to 120 °C and stirring was continued for 1.5 hours during which time the metallocene compound was evenly spread throughout the support material. Then the catalyst obtained was cooled down to room temperature and moved to a glove box. The Al and Zr contents of the catalyst were determined to be 10.8 and 0.164 percent by weight, respectively. The SEM pictures taken from the catalyst showed that there were no crystallites on the silica surface indicating that the metallocene compound was spread throughout the support material.

### Example 3

A catalyst was prepared as in Example 2, except that 7.6 grams of support material and 84 mg of metallocene compound bis(indenyl)zirconium dichloride was used. SEM pictures indicated same good catalyst morphology as in Example 2.

### Polymerization

Polymerizations were made in a 3 dm³ stainles steel autoclave reactor equipped with a paddle stirrer and means for continuous supply of ethylene to keep the total pressure at desired value during the run. 1.8 dm³ of dried and deoxygenated n-pentane was added first into the reactor. Then the catalyst weighed in a glove box was added and the reactor was heated up to the desired polymerization temperature. Ethylene and comonomer or ethylene and hydrogen were continuously introduced into the reactor. After 60 minutes the polymerization was stopped by rapidly venting off the ethylene and by cooling down the reactor.

### Example 4

136 mg of catalyst prepared in Example 2 was weighed for polymerization. The polymerization temperature was 70 °C and hydrogen was fed from a pressurized cylinder (500 ml and 2.1 bar) with ethylene at the beginning of polymerization. Ethylene and hydrogen partial pressure was kept at 10 bar during the polymerization. After one hour the polymerization was stopped and 308 g of polyethylene having melt index MI₂ of 0.72 was recovered.

### Example 5

The polymerization was carried out as in Example 4, but the catalyst amount was 138 mg and hexene (50 ml) was used instead of hydrogen. It was obtained 210 g of ethylene-hexene copolymer having a MI₂ of 2.4 and a narrow molecular weight distribution of 2.2 measured with GPC. The copolymer contained 1.8 percent by weight of hexene (FTIR).

### Example 6

The polymerization was carried out as in Example 4, except that 132 mg of the catalyst of Example 3 was used. 257 g of polyethylene having MI₂ of 1.6 was obtained.

### Example 7

The polymerization was carried out as in Example 5 by using 100 mg of catalyst of Example 3, which yielded 24 g of ethylene-hexene copolymer having a melt index (MI₂) of 0.21 and a narrow MWD of 2.7 measured with GPC. The FTIR measurement indicated that there was 1.9 percent by weight of hexene in the polymer chain.

## Claims

1. Method for preparing a catalyst for homo or copolymerization of olefins, said catalyst component comprising at least one metallocene compound on porous inorganic carrier, **characterized in** that said metallocene compound is mixed as pure compound in the absence of solvents with said carrier at a temperature which is at least 50 °C but below the vapourization temperature of the metallocene compound in reactor conditions for a sufficient time to obtain said catalyst component having said metallocene evenly distributed onto carrier particles.

2. Method according to claim 1, **characterized in** that said metallocene compound has a formula (a), wherein (a) is (Cp)ₘRₙMR'ₒXₚ, where Cp is an unsubstituted or substituted and/or fused homo or heterocyclopentadienyl, R is a group having 1-4 atoms and bridging two Cp rings, M is a transition metal group 4A, 5A or 6A (Hubbard), R' is C₁-C₂ hydrocarbyl or hydrocarboxy group and X is a halogen atom, wherein m is 1-3, n is 0 or 1, p is 0-3 and sum n+0+p corresponds the oxidation state of transition metal M.

3. Method according to claim 2, **characterized in** that M in formula (a) is zirconium or hafnium.

4. Method according to claims 2-3, **characterized in** that said metallocene compound is bis(cyclopentadienyl)zirconium dichloride or bis(indenyl)zirconiumdichloride.

5. Method according to claims 1-4, **characterized in** that said carrier and said metallocene compound are mixed for a period from one minute to three hours.

6. Method according to claim 5, **characterized in** that said carrier material and said metallocene compound are first mixed at a lower temperature and then at an increased temperature of at least 100 °C.

7. Method for preparing a catalyst component for homo or copolymerization of olefins, said catalyst component comprising alumoxane compounds and metallocene compounds on porous inorganic carrier, **characterized in** the following steps:
i) said carrier is first impregnated with an alumoxane compound having a formula (b) or (c), wherein (b) is R-(AI(R)-O)ₙ-AIR2 and (c) is (-Al(R)-O-)ₘ, where n is 1-40, m is 3-40 and R is a C₁-C₈ alkyl group, in order to achieve a first reaction product,
ii) said first reaction product is mixed in the absence of solvents with a metallocene compound having a formula (a), wherein (a) is (CP)ₘRₙMR'ₒXₚ, where Cp is an unsubstituted or substituted and/or fused homo or heterocyclopentadienyl, R is a group having 1-4 atoms and bridging two Cp rings, M is a transition meal of group 4A, 5A or 6A (Hubbard), R' is C₁-C₂ hydrocarbyl or hydrocarboxy group and X is a halogen atom, wherein m is 1-3, n is 0 or 1, p is 0-3 and sum n+o+p corresponds the oxidation state of the transition metal M, and
iii) mixing the product obtained in step (ii) for a sufficient time to obtain a homogenous mixture at a temperature which is at least 50 °C but below the vapourization temperature of the metallocene compound for obtaining the catalyst component.

8. Method according to claim 7, **characterized in** that in step (i) said carrier is impregnated with a solution of said alumoxane compound and after the impregnation the solvent is removed.

9. Method according to claim 8, **characterized in** that said solvent is selected from linear or cyclic alkanes or aromatics.

10. Method according to claims 7-9, **characterized in** that the volume of said alumoxane solution is less than or equal to the total pore volume of the carrier material.

11. Method according to claims 7-10, **characterized in** that the amount of alumoxane is selected so that the ratio of aluminum to the transition metal is from 25 to 10000, preferably from 50 to 500.

## Patentansprüche

1. Verfahren zur Herstellung eines Katalysators für die Homo- oder Copolymerisation von Olefinen, wobei die Katalysatorkomponente mindestens eine Metallocenverbindung auf einem porösen anorganischen Träger umfaßt, dadurch gekennzeichnet, daß die Metallocenverbindung als reine Verbindung in Abwesenheit von Lösungsmitteln mit dem Träger bei einer Temperatur, die mindestens 50 °C beträgt, aber unterhalb der Verdampfungstemperatur der Metallocenverbindung bei Reaktorbedingungen ist, eine ausreichende Dauer gemischt wird, um die Katalysatorkomponente mit auf Trägerpartikeln gleichmäßig verteiltem Metallocen zu erhalten.

2. Verfahren nach Anspruch 1, dadurch gekennzeichnet, daß die Metallocenverbindung eine Formel (a) besitzt, wobei (a) (Cp)ₘRₙMR'ₒXₚ ist, in der Cp ein nicht substituiertes oder substituiertes und/oder kondensiertes Homo- oder Heterocyclopentadienyl ist, R eine zwei Cp-Ringe verbrückende Gruppe mit 1 bis 4 Atomen ist, M ein Übergangsmetall der Gruppe 4A, 5A oder 6A (Hubbard) ist, R' eine C₁- bis C₂-Hydrocarbyl- oder Hydrocarboxylgruppe ist und X ein Halogenatom ist, wobei m 1 bis 3 ist, n 0 oder 1 ist, p 0 bis 3 ist und die Summe n + o + p dem Oxidationszustand des Übergangsmetalls M entspricht.

3. Verfahren nach Anspruch 2, dadurch gekennzeichnet, daß das M in der Formel (a) Zirkonium oder Hafnium ist.

4. Verfahren nach den Ansprüchen 2 und 3, dadurch gekennzeichnet, daß die Metallocenverbindung
Bis(cyclopentadienyl)zirkoniumdichlorid oder
Bis(indenyl)zirkoniumdichlorid ist.

5. Verfahren nach den Ansprüchen 1 bis 4, dadurch gekennzeichnet, daß der Träger und die Metallocenverbindung für eine Dauer von einer Minute bis 3 Stunden gemischt werden.

6. Verfahren nach Anspruch 5, dadurch gekennzeichnet, daß das Trägermaterial und die Metallocenverbindung zunächst bei einer niedrigeren Temperatur und dann bei einer erhöhten Temperatur von mindestens 100 °C gemischt werden.

7. Verfahren zur Herstellung einer Katalysatorkomponente für die Homo- oder Copolymerisation von Olefinen, wobei die Katalysatorkomponente Alumoxanverbindungen und Metallocenverbindungen auf einem porösen anorganischen Träger umfaßt, gekennzeichnet durch die folgenden Schritte:
i) der Träger wird zunächst mit einer Alumoxanverbindung mit einer Formel (b) oder (c) imprägniert, wobei (b) R-(Al(R)-O)ₙ-AIR₂ ist und (c) (-Al(R)-O-)ₘ ist, wobei n 1 bis 40 ist, m 3 bis 40 ist und R eine C₁- bis C₈-Alkylgruppe ist, um ein erstes Reaktionsprodukt zu erhalten,
ii) das erste Reaktionsprodukt wird in Abwesenheit von Lösungsmitteln mit einer Metallocenverbindung mit einer Formel (a) gemischt, wobei (a) (Cp)ₘRₙMR'ₒXₚ ist, in der Cp ein nicht substituiertes oder substituiertes und/oder kondensiertes Homo- oder Heterocyclopentadienyl ist, R eine zwei Cp-Ringe verbrückende Gruppe mit 1 bis 4 Atomen ist, M ein Übergangsmetall der Gruppe 4A, 5A oder 6A (Hubbard) ist, R' eine C₁- bis C₂-Hydrocarbyl- oder Hydrocarboxylgruppe ist und X ein Halogenatom ist, wobei m 1 bis 3 ist, n 0 oder 1 ist, p 0 bis 3 ist und die Summe n + o + p dem Oxidationszustand des Übergangsmetalls M entspricht, und
ii) Mischen des in Schritt (ii) erhaltenen Produkts für eine ausreichende Dauer, um eine homogene Mischung bei einer Temperatur zu erhalten, die mindestens 50 °C beträgt, aber unterhalb der Verdampfungstemperatur der Metallocenverbindung ist, um die Katalysatorkomponente zu erhalten.

8. Verfahren nach Anspruch 7, dadurch gekennzeichnet, daß der Träger in Schritt (i) mit einer Lösung der Alumoxanverbindung imprägniert wird und nach der Imprägnierung das Lösungsmittel entfernt wird.

9. Verfahren nach Anspruch 8, dadurch gekennzeichnet, daß das Lösungsmittel aus linearen oder cyclischen Alkanen oder Aromaten ausgewählt wird.

10. Verfahren nach den Ansprüchen 7 bis 9, dadurch gekennzeichnet, daß das Volumen der Alumoxanlösung kleiner oder gleich dem gesamten Porenvolumen des Trägermaterials ist.

11. Verfahren nach den Ansprüchen 7 bis 10, dadurch gekennzeichnet, daß die Menge an Alumoxan so gewählt wird, daß das Verhältnis von Aluminium zu Übergangsmetall im Bereich von 25 bis 10000, vorzugsweise von 50 bis 500, liegt.

## Revendications

1. Procédé de préparation d'un catalyseur pour l'homopolymérisation ou la copolymérisation d'oléfines, ledit constituant catalytique comprenant au moins un composé de métallocène sur un support inorganique poreux, caractérisé en ce que l'on mélange avec ledit support ledit composé de métallocène sous forme de composé pur, en l'absence de solvant, à une température d'au moins 50°C mais inférieure à la température de vaporisation du composé de métallocène dans les conditions du réacteur, pendant un temps suffisant pour obtenir ledit constituant catalytique dans lequel ledit métallocène est réparti uniformément sur les particules de support.

2. Procédé selon la revendication 1, caractérisé en ce que ledit composé de métallocène a la formule (a), (a) étant (Cp)ₘRₙMR'ₒXₚ, où Cp est un groupe homo- ou hétérocyclopentadiényle non substitué ou substitué et/ou condensé, R est un groupe de 1 à 4 atomes formant un pont entre deux cycles Cp, M est un métal de transition du groupe 4A, 5A ou 6A (Hubbard), R' est un groupe hydrocarbyle ou hydrocarboxy en C₁-C₂ et X est un atome d'halogène, m est 1-3, n est 0 ou 1, p est 0-3 et la somme n+o+p correspond à l'état d'oxydation du métal de transition M.

3. Procédé selon la revendication 2, caractérisé en ce que, dans la formule (a), M est le zirconium ou le hafnium.

4. Procédé selon les revendications 2-3, caractérisé en ce que ledit composé de métallocène est le dichlorure de bis(cyclopentadiényl)zirconium ou le dichlorure de bis(indényl)zirconium.

5. Procédé selon les revendications 1-4, caractérisé en ce que l'on mélange ledit support et le dit composé de métallocène pendant une période de 1 minute à 3 heures.

6. Procédé selon la revendication 5, caractérisé en ce que l'on mélange d'abord ledit matériau support et ledit composé de métallocène à une température inférieure, puis à une température plus élevée, d'au moins 100°C.

7. Procédé de préparation d'un constituant catalytique pour l'homopolymérisation ou la copolymérisation d'oléfines, ledit constituant catalytique comprenant des composés d'alumoxane et des composés de métallocène sur un support inorganique poreux, caractérisé par les étapes suivantes:
i) on imprègne d'abord ledit support avec un composé d'alumoxane ayant la formule (b) ou (c), (b) étant R-(Al(R)-O)ₙ-AlR₂ et (c) étant (-Al(R)-O-)ₘ, où n est 1-40, m est 3-40 et R est un groupe alkyle en C₁-C₈, pour obtenir un premier produit de réaction,
ii) on mélange ledit premier produit de réaction, en l'absence de solvant, avec un composé de métallocène ayant la formule (a), (a) étant (Cp)ₘRₙMR'ₒXₚ, où Cp est un groupe homo- ou hétérocyclopentadiényle non substitué ou substitué et/ou condensé, R est un groupe de 1 à 4 atomes formant un pont entre deux cycles Cp, M est un métal de transition du groupe 4A, 5A ou 6A (Hubbard), R' est un groupe hydrocarbyle ou hydrocarboxy en C₁-C₂ et X est un atome d'halogène, m est 1-3, n est 0 ou 1, p est 0-3 et la somme n+o+p correspond à l'état d'oxydation du métal de transition M, et
iii) on mélange le produit obtenu dans l'étape (ii) pendant un temps suffisant pour obtenir un mélange homogène à une température d'au moins 50°C, mais inférieure à la température de vaporisation du composé de métallocène, pour obtenir le constituant catalytique.

8. Procédé selon la revendication 7, caractérisé en ce que, dans l'étape (i), on imprègne ledit support avec une solution dudit composé d'alumoxane et on élimine le solvant après l'imprégnation.

9. Procédé selon la revendication 8, caractérisé en ce que ledit solvant est choisi parmi des alcanes linéaires ou cycliques ou des produits aromatiques.

10. Procédé selon les revendications 7-9, caractérisé en ce que le volume de ladite solution d'alumoxane est inférieur ou égal au volume total des pores du matériau support.

11. Procédé selon les revendications 7-10, caractérisé en ce que la quantité d'alumoxane est choisie de manière que le rapport de l'aluminium au métal de transition soit de 25 à 10 000, de préférence de 50 à 500.
